# EUROPEAN PATENT APPLICATION

(11) **EP 2 487 598 A1**
(43) Date of publication of application: **15.08.2012**
(21) Application number: 10838627.7
(22) Date of filing: 08.12.2010
(51) Int. Cl.: G06F 13/10, G06F 3/06

(54) **DATA CARD UPGRADING METHOD AND DEVICE**

(30) Priority: 24.12.2009 CN 200910261689
(71) Applicant: Huawei Device Co., Ltd., Longgang District Shenzhen Guangdong 518129 (CN)
(72) Inventor: KONG, Linghe, Shenzhen, Guangdong 518129 (CN); QIN, Wei, Shenzhen, Guangdong 518129 (CN)
(74) Representative: Pfenning, Meinig & Partner GbR
(86) International application number: PCT/CN2010/079564
(87) International publication number: WO 2011/076064

(57) **Abstract**

The present invention relates to the data card field and discloses a method and an apparatus for updating a data card, which implements the updating of the data card when a data card driver is not installed on a PC, and makes it convenient for a user to update the data card. The present invention includes: implementing a connection between a computer and a data card through a standard device interface of the computer; virtualizing the data card as a standard device of the computer and obtaining class information, subclass information, and protocol information of the standard device through the standard device interface; and according to the obtained class information, subclass information, and protocol information of the standard device, determining a system driver corresponding to the standard device, and providing a system driver updating service for the data card.

## Description

### FIELD OF THE INVENTION

The present invention relates to the data card field, and in particular, to a method and an apparatus for updating a data card.

### BACKGROUND OF THE INVENTION

With the advent of a wireless communication age, people often use various data cards with varied functions when using portable devices in their everyday life. The key differences of these data cards are the communication protocol stacks and the related applications running on the data cards. To provide a better user experience and promote the software performance and functioning of the data cards, it is often needed to update the communication protocols, applications, and background software on the data cards.

At present, three parts are needed for the updating of either a data card board or the background software included in the data card. The three parts are: update program, PC (Personal Computer, personal computer) driver, and data card board. The specific data card updating process is as follows: Before a data card is updated, the driver corresponding to the data card needs to be installed on a PC and after the data card driver is installed, the data card is inserted into a corresponding port of the PC, and the PC identifies the data card port according to the installed driver; after the data card port is identified, the PC starts the update program and the update program delivers the update package to the data card through the PC driver; and the data card receives the update data and writes the data in the flash (flash memory) of the data card itself, and thereby the updating of the data card is completed.

During the process of implementing the above data card updating, the inventor finds that the prior art has at least the following problem: The updating of a data card according to the prior art requires installation of the data card driver on the corresponding PC; a PC without a driver installed cannot perform the updating of the data card, the use scope of the data card is restricted when it is necessary to update the data card program, which brings inconvenience to the user.

### SUMMARY OF THE INVENTION

Embodiments of the present invention provide a method and an apparatus for updating a data card, which enables a data card to be updated when a data card driver is not installed on a PC, and makes it convenient for the user to update the data card.

For the above purpose, embodiments of the present invention adopt the following technical solution:

A method for updating a data card includes:
implementing a connection between a computer and a data card through a standard device interface of the computer;
virtualizing the data card as a standard device of the computer and obtaining class information, subclass information, and protocol information of the standard device through the standard device interface; and
according to the class information, subclass information, and protocol information of the standard device, determining a system driver corresponding to the standard device, and providing a driver updating service for the data card.

An apparatus for updating a data card includes:
a connecting unit, configured to implement a connection between a computer and the data card through a standard device interface of the computer;
a standard device information obtaining unit, configured to virtualize the data card as a standard device of the computer, and obtain class information, subclass information, and protocol information of the standard device through the standard device interface;
a determining unit, configured to, according to the class information, subclass information, and protocol information of the standard device obtained by the obtaining unit, determine a system driver corresponding to the standard device, and provide the system driver for the data card; and
a running unit, configured to implement updating of the data card.

In the technical solution of the present invention, the data card is virtualized as a standard device of the computer and the standard device driver included in the operating system of the computer is used to drive the data card. Thereby, when a driver corresponding to the data card is not installed on the computer, a data card may still be updated, which makes it convenient for a user to update the data card.

### BRIEF DESCRIPTION OF THE DRAWINGS

To illustrate the technical solution of the embodiments of the present invention more clearly, the accompanying drawings to be used in the description of the embodiments of the present invention or the prior art are briefly introduced in the following. It is apparent that the accompanying drawings are only some embodiments of the present invention. Persons of ordinary skill in the art can derive other drawings from these drawings without creative efforts.

FIG 1 is a flowchart of a method for updating a data card according Embodiment 1 of the present invention;

FIG 2 is a flowchart of a method for updating a data card according Embodiment 2 of the present invention;

FIG. 3 is a composition block diagram of an apparatus for updating a data card according Embodiment 3 of the present invention; and

FIG. 4 is a composition block diagram of an apparatus for updating a data card according Embodiment 4 of the present invention.

### DETAILED DESCRIPTION OF THE EMBODIMENTS

The technical solution of the embodiments of the present invention is hereinafter described clearly and completely with reference to the accompanying drawings in the embodiments of the present invention. Apparently, the embodiments herein are only some rather than all of the embodiments of the present invention. Based on the embodiments of the present invention, persons of ordinary skill in the art can derive other embodiments without creative efforts and such other embodiments all fall within the scope of the present invention.

### Embodiment 1

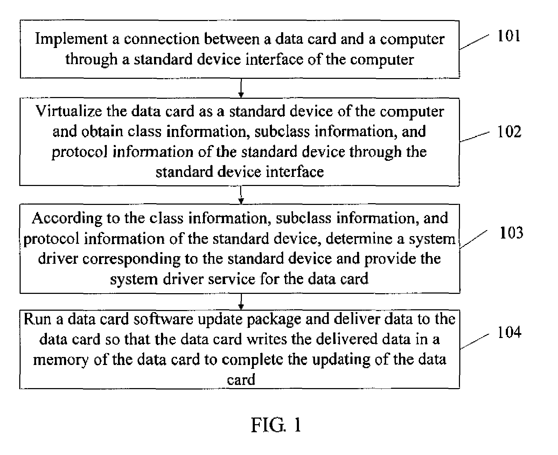

An embodiment of the present invention provides a method for updating a data card. As shown in FIG 1, the method includes the following steps:

101. Implement a connection between the data card and a computer through a standard device interface of the computer.

The standard device interface of the computer may be but is not limited to the USB (Universal Serial Bus, universal serial bus) interface. For example, when a user needs to update the data card, if the communication interface of the data card is a USB interface, the user only needs to insert the data card into the USB communication interface of the computer to implement the connection between the data card and the computer.

102. Virtualize the data card as a standard device of the computer and obtain the class information (class), subclass information (subclass), and protocol information (protocol) of the standard device through the standard device interface. The standard device of the computer may be a CD-ROM device or a storage device.

When the user inserts the data card into the standard device interface of the computer, the standard device interface of the computer is activated, so that the computer may obtain the class information, subclass information and protocol information of the standard device automatically through the standard device interface to determine which standard device needs to be supported by a driver. The class information may be the vendor identifier of the device, the subclass information may be the product identifier of the device, and the protocol information may be protocol type information of the device.

103. According to the obtained class information, subclass information, and protocol information of the standard device, determine the system driver corresponding to the standard device, and provide a system driving service for the data card.

A correspondence between each standard device of the computer and the class information, subclass information, and protocol information of the standard device is set in an operating system. After the class information, subclass information, and protocol information of the standard device of the computer is obtained, it may be determined, according to the class information, subclass information, and protocol information of the standard device and the set correspondence, which standard device of the computer the data card is virtualized as. After which standard device of the computer the data card may be virtualized as is determined, the system driver that matches the standard device and is set in the operating system may be searched for according to the determined standard device, so that the system driver drives the data card.

104. After the system driver drives the data card and a communication connection between the computer and the data card is implemented, run a data card software update package and deliver data to the data card so that the data card writes the delivered data into a memory of the data card to complete the updating of the data card.

In the embodiment of the present invention, after the connection between the data card and the computer is implemented, the data card is virtualized as a standard device of the computer; the class information, subclass information, and protocol information of the standard device is obtained through the standard device interface of the computer; the system driver that corresponds to the standard device and is included system is determined according to the obtained information; and the data card is driven by the driver of the standard device to implement the communication connection between the computer and the data card; then the computer runs the update package of the data card and delivers update data to the data card, and thereby the updating of the data card is implemented. In comparison with the prior art where the driver of the data card should be installed to update the data card, in the embodiment of the present invention, the data card is virtualized as a standard device of the computer and a standard device driver included in the operating system of the computer is used to drive the data card, and thereby the data card may be updated when a driver corresponding to the data card is not installed on the computer, which makes it convenient for the user to update the data card.

### Embodiment 2

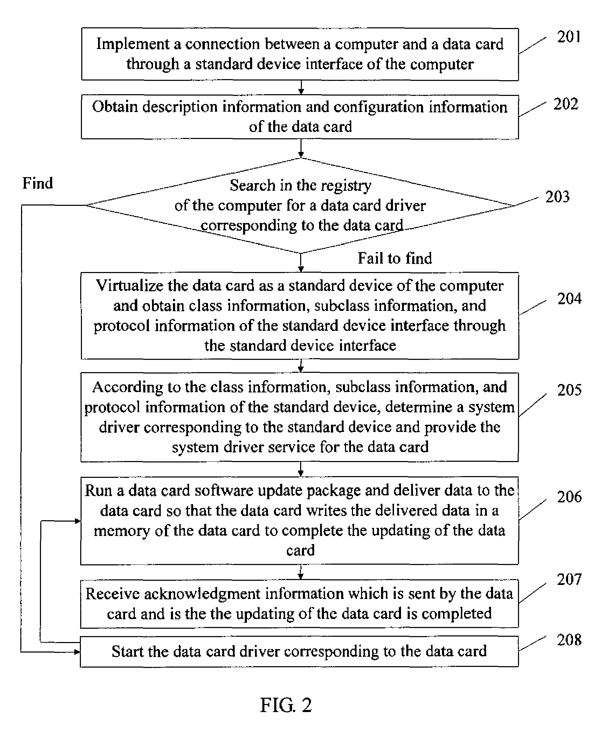

An embodiment of the present invention provides a method for updating a data card. As shown in FIG 2, the method includes the following steps:

201. Implement a connection between a computer and the data card through a standard device interface of the computer.

The standard device interface of the computer may be but is not limited to a USB (Universal Serial Bus, universal serial bus) interface. For example, when a user needs to update the data card, if the communication interface of the data card is a USB interface, the user only needs to insert the data card into the USB communication interface of the computer to implement the connection between the data card and the computer.

202. Obtain description information and configuration information of the data card.

The description information of the data card generally includes an ID (dentification, identification) of a device vendor of the data card and an ID of the data card. The configuration information includes class information of the data card and the class of the data card may be a CD-ROM device, a USB device, or a storage device.

203. Search in a registry of the computer for a data card driver corresponding to the data card, according to the description information and configuration information of the data card. If no data card driver corresponding to the data card is found in the registry of the computer, perform step 204; if a data card driver corresponding to the data card is found in the registry of the computer, perform step 208.

204. Virtualize the data card as a standard device of the computer and obtain the class information, subclass information, and protocol information of the standard device through the standard device interface. The class information may be the vendor identifier of the device, the subclass information may be the product identifier of the device, and the protocol information may be protocol type information of the device.

When the user inserts the data card into the standard device interface of the computer, the standard device interface of the computer is activated, so that the computer may obtain the class information, subclass information and protocol information of the standard device automatically through the standard device interface to determine which standard device needs to be supported by a driver. The standard device may be but is not limited to a CD-ROM device or a storage device.

205. According to the obtained class information, subclass information, and protocol information of the standard device, determine the system driver corresponding to the standard device, and provide a system driving service for the data card.

A correspondence between each standard device of the computer and the class information, subclass information, and protocol information of the standard device is set in an operating system. After the class information, subclass information, and protocol information of the standard device interface of the computer are obtained, it may be determined, according to the class information, subclass information, and protocol information of the standard device and the set correspondence, which standard device of the computer the data card is virtualized as. After which standard device of the computer the data card may be virtualized as is determined, the system driver that matches the standard device and is set in the operating system may be searched for according to the determined standard device, so that the system driver drives the data card.

206. After the system driver drives the data card and a communication connection between the computer and the data card is implemented, run a data card software update package and deliver data to the data card so that the data card writes the delivered data to a memory of the data card to complete the updating of the data card.

The delivering data to the data card by the computer includes: delivering data to the data card through an SCSI (Small Computer System Interface, small computer system interface) command, where an SCSI is a high-efficiency bus interface provided for interconnection with peripherals such as a magnetic disk, a magnetic tape, a printer, and a scanner.

207. After the data card writes the update data delivered by the computer in the memory, the data card may send information that the updating of the data card is completed to the computer, and the computer further receives the acknowledgement information which is sent by the data card and is that the updating of the data card is completed.

208. Start the data card driver corresponding to the data card and perform step 206 to implement updating of the data card.

In the embodiment of the present invention, after the connection between the data card and the computer is implemented through the standard device interface of the computer, it is first detected whether a driver corresponding to the data card exists in the computer; if no driver corresponding to the data card exists in the computer, the data card is virtualized as a standard device of the computer, then the class information, subclass information, and protocol information of the standard device is obtained through the standard device interface of the computer, and the driver that corresponds to the standard device and is included in the system is determined according to the obtained information, then the data card is driven by the driver of the standard device, and the computer runs the update package of the data card and delivers update data to the data card, and thereby the updating of the data card is implemented. In comparison with the prior art where a driver of the data card should be installed to update the data card, in the embodiment of the present invention the data card is virtualized as a standard device of the computer when no driver corresponding to the data card exists in the computer, and a standard device driver included in the operating system of the computer is used to drive the data card, and thereby the data card may be updated when the driver corresponding to the data card is not installed on the computer, which makes it convenient for the user to update the data card. Complicated steps of installing the corresponding data card driver when the data card needs to be updated is avoided, which thereby simplifies the data card updating procedure and reduces the waste of human and material resources because of installing the data card driver.

Moreover, in the embodiment of the present invention, when the data card that needs to be updated is inserted into the computer, if it is detected that the driver corresponding to the data card exists in the registry of the computer, the driver corresponding to the data card may be started directly to implement the updating of the data card, which enables the data card to be updated in multiple manners and makes the updating of the data card flexible.

Further, after the data card is updated, the data card may further return information that the updating of the data card is completed to the computer, so that the user stops the data card updating operation, which makes it controllable to update the data card.

### Embodiment 3

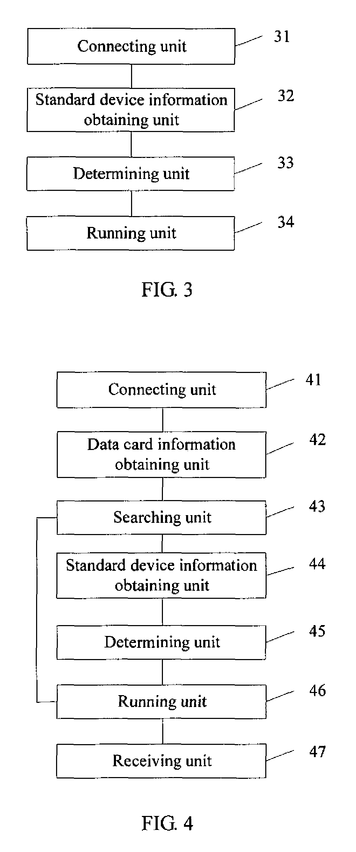

An embodiment of the present invention provides an apparatus for updating a data card. As shown in FIG 3, the apparatus includes a connecting unit 31, a standard device information obtaining unit 32, a determining unit 33, and a running unit 34.

The connecting unit 31 is configured to implement a connection between a computer and the data card through a standard device interface of the computer, where the standard device interface of the computer may be but is not limited to a USB (Universal Serial Bus, universal serial bus) interface. For example, when a user needs to update the data card, if the communication interface of the data card is a USB interface, the user only needs to insert the data card into the USB communication interface of the computer to implement the connection between the data card and the computer.

After the data card and the computer are connected, the standard device information obtaining unit 32 is configured to virtualize the data card as a standard device of the computer and obtain the class information, subclass information, and protocol information of the standard device through the standard device interface, where the standard device may be but is not limited to a CD-ROM device or a storage device. When the user inserts the data card into the standard device interface of the computer, the standard device interface of the computer is activated and then the computer may obtain the class information, subclass information, and protocol information of the standard device automatically through the standard device interface, so as to determine which standard device needs to be supported by a driver. The class information may be the vendor identifier of the device, the subclass information may be the product identifier of the device, and the protocol information may be protocol type information of the device.

The determining unit 33 is configured to, according to the class information, subclass information, and protocol information of the standard device obtained by the standard device information obtaining unit 32, determine a system driver corresponding to the standard device, and provide a system driving service for the data card, where a correspondence is set between each standard device of the computer and the class information, subclass information, and protocol information of the standard device in an operating system, and after the class information, subclass information, and protocol information of the standard device of the computer are obtained, it may be determined, according to the obtained class information, subclass information, and protocol information of the standard device and the correspondence, which standard device of the computer the data card is virtualized as. After which standard device of the computer the data card may be virtualized as is determined, the system driver that matches the standard device and is set in the operating system may be searched for according to the determined standard device, so that the system driver drives the data card.

After the system driver drives the data card to implement the communication connection between the computer and the data card, the running unit 34 is configured to run an data card software update package and deliver data to the data card so that the data card writes the delivered data into a memory of the data card to complete the updating of the data card.

In the embodiment of the present invention, after the connection between the data card and the computer is implemented, the data card is virtualized as a standard device of the computer; the class information, subclass information, and protocol information of the standard device is obtained through the standard device interface of the computer; the driver that corresponds to the standard device and is included in the system is determined according to the obtained information; and the data card is driven by the driver of the standard device to implement a communication connection between the computer and the data card; then the computer runs the update package of the data card and delivers update data to the data card, and thereby the updating of the data card is implemented. In comparison with the prior art where the driver of the data card should be installed to update the data card, in the embodiment of the present invention, the data card is virtualized as a standard device of the computer and a standard device driver included in the operating system of the computer is used to drive the data card, and thereby the data card may be updated when a driver corresponding to the data card is not installed on the computer, which makes it convenient for the user to update the data card.

### Embodiment 4

An embodiment of the present invention provides an apparatus for updating a data card. As shown in FIG 4, the apparatus includes a connecting unit 41, a data card information obtaining unit 42, a searching unit 43, a standard device information obtaining unit 44, a determining unit 45, a running unit 46, and a receiving unit 47.

The connecting unit 41 is configured to implement a connection between a computer and a data card through a standard device interface of the computer, where the standard device interface of the computer may be but is not limited to a USB (Universal Serial Bus, universal serial bus) interface. For example, when a user needs to update the data card, if the communication interface of the data card is a USB interface, the user only needs to insert the data card into the USB communication interface of the computer to implement the connection between the data card and the computer.

After the connecting unit 41 implements the connection between the computer and the data card through the standard device interface of the computer, the data card information obtaining unit 42 is configured to obtain the description information and configuration information of the data card; after the description information and configuration information of the data card are obtained, the searching unit 43 searches in the registry of the computer for a data card driver corresponding to the data card, according to the description information and configuration information of the data card; and if the searching unit 43 fails to find a data card driver corresponding to the data card in the registry of the computer, the standard device information obtained unit 44 is invoked. The description information of the data card generally includes an ID (dentification, identification) of the device vendor of the data card and an ID of the data card; and the configuration information includes class information of the data card and the class of the data card may be CD-ROM device, USB device, or storage device.

The standard device information obtaining unit 44 is configured to obtain class information, subclass information, and protocol information of the standard device through the standard device interface, by virtualizing the data card as a standard device of the computer. The class information may be a vendor identifier of the device, the subclass information may be a product identifier of the device, and the protocol information may be protocol type information of the device. The standard device may be but is not limited to a CD-ROM device or a storage device. After the class information, subclass information, and protocol information of the standard device is obtained, the determining unit 45 is configured to, according to the class information, subclass information, and protocol information of the standard device obtained by the standard device information obtaining unit 44, determine a system driver corresponding to the standard device, and provide a system driving service for the data card. A correspondence between each standard device and the class information, subclass information and protocol information of the standard device is set in an operating system. After the class information, subclass information, and protocol information of the standard device interface of the computer is obtained, which standard device of the computer the data card is virtualized as may be determined according to the obtained class information, subclass information, and protocol information of the standard device and the set correspondence. After which standard device of the computer the data card may be virtualized as is determined, the system driver that matches the standard device and is set in the operating system may be searched for according to the determined standard device, so that the system driver drives the data card.

After the system driver drives the data card to implement the communication connection between the computer and the data card, the running unit 46 is configured to run the data card software update package and deliver data to the data card, so that the data card writes the delivered data to a memory of the data card to complete the updating of the data card. The delivering data to the data card by the computer includes: delivering data to the data card through an SCSI (Small Computer System Interface, small computer system interface) command, where an SCSI is a high-efficiency bus interface provided for the connection of peripherals such as a magnetic disk, a magnetic tape, a printer, and a scanner.

If the searching unit 43 finds a data card driver corresponding to the data card in the registry of the computer, the data card driver corresponding to the data card is started and the running unit 46 is invoked to run an data card software update package and deliver data to the data card, so that the data card writes the delivered data in a memory of the data card to complete the updating of the data card.

Further, after the data card writes the update data delivered by the computer in the memory, the data card may send information that the updating of the data card is completed to the computer, and the apparatus further includes a receiving unit 47. The receiving unit 47 is configured to receive the acknowledgement information which is sent by the data card and is that the updating of the data card is completed.

In the embodiment of the present invention, after a connection between the data card and the computer is implemented through the standard device interface of the computer, it is first detected whether a driver corresponding to the data card exists in the computer; if no driver corresponding to the data card exists in the computer, the data card is virtualized as a standard device of the computer, then the class information, subclass information, and protocol information of the standard device is obtained through the standard device interface of the computer, and the driver that corresponds to the standard device and is included in the system is determined according to the obtained information, then the data card is driven by the driver of the standard device, and the computer runs the update package of the data card and delivers update data to the data card, and thereby the updating of the data card is implemented. In comparison with the prior art where a driver of the data card should be installed to update the data card, in the embodiment of the present invention, the data card is virtualized as a standard device of the computer when no driver corresponding to the data card exists in the computer, and a standard device driver included in the operating system of the computer is used to drive the data card, and thereby the data card may be updated when the driver corresponding to the data card is not installed on the computer, which makes it convenient for the user to update the data card. Complicated steps of installing the corresponding data card driver when the data card needs to be updated is avoided, which thereby simplifies the data card updating procedure and reduces the waste of human and material resources because of installing the data card driver.

Moreover, in the embodiment of the present invention, when the data card that needs to be updated is inserted into the computer, if it is detected that the driver corresponding to the data card exists in the registry of the computer, the driver corresponding to the data card may be started directly to implement the updating of the data card, which enables the data card to be updated in multiple manners and makes the updating of the data card flexible.

Further, after the data card is updated, the data card may further return information that the updating of the data card is completed to the computer, so that the user stops the data card updating operation, which makes it controllable to update the data card.

The updating of a data card is described in detail in the embodiments of the present invention. The method can be further extended to the updating of terminal devices.

According to the foregoing description of the embodiments of the present invention, those skilled in the art understand that the present invention can be implemented by software with necessary universal hardware or by hardware only, but the former is a preferred implementation in most circumstances. Based on such understanding, the essence of the technical solution of the embodiments of the present invention or the part contributing to the prior art may be embodied in the form of a software product. The computer software product is stored in a readable storage medium, such as a floppy disk, a hard disk, or an optical disk in a computer, and includes several instructions that instruct a computer device (such as a personal computer, a server, or a network device) to execute the method described in the embodiments of the present invention.

Detailed above are only specific implementation manners of the present invention, but the scope of the present invention is not limited thereto. Any modification or substitution readily conceivable by those skilled in the art within the scope of the technology disclosed in the present invention shall fall within the scope of the present invention. Therefore, the scope of the present invention is subject to the appended claims.

## Claims

1. A method for updating a data card, comprising:
implementing a connection between a computer and the data card through a standard device interface of the computer;
virtualizing the data card as a standard device of the computer and obtaining class information, subclass information, and protocol information of the standard device through the standard device interface; and
according to the obtained class information, subclass information, and protocol information of the standard device, determining a system driver corresponding to the standard device, and providing a driver updating service for the data card.

2. The method for updating a data card according to claim 1, wherein, after implementing a connection between a computer and a data card through a standard device interface of the computer, the method further comprises:
obtaining description information and configuration information of the data card;
searching in a registry of the computer for a data card driver corresponding to the data card, according to the description information and configuration information of the data card; and
if no data card driver corresponding to the data card is found in the registry of the computer, virtualizing the data card as a standard device of the computer and obtaining the class information, subclass information, and protocol information of the standard device through the standard device interface.

3. The method for updating a data card according to claim 1 or 2, wherein the standard device comprises a CD-ROM device or a storage device.

4. The method for updating a data card according to claim 1 or 2, wherein:
the class information is a vendor identifier of the device;
the subclass information is a product identifier of the device; and
the protocol information is protocol type information of the device.

5. The method for updating a data card according to claim 1, wherein the providing a driver updating service for the data card comprises:
delivering data to the data card through a small computer system interface, SCSI, command to implement updating of the data card.

6. An apparatus for updating a data card, comprising:
a connecting unit, configured to implement a connection between a computer and the data card through a standard device interface of the computer;
a standard device information obtaining unit, configured to virtualize the data card as a standard device of the computer and obtain class information, subclass information, and protocol information of the standard device through the standard device interface;
a determining unit, configured to, according to the class information, subclass information, and protocol information of the standard device obtained by the obtaining unit, determine a system driver corresponding to the standard device, and provide the system driver for the data card; and
a running unit, configured to implement updating of the data card.

7. The apparatus for updating a data card according to claim 6, further comprising:
a data card information obtaining unit, configured to obtain description information and configuration information of the data card, after the connecting unit implements a connection between the computer and the data card through the standard device interface of the computer; and
a searching unit, configured to search in a registry of the computer for a data card driver corresponding to the data card, according to the description information and configuration information of the data card obtained by the data card information obtaining unit; and if no data card driver corresponding to the data card is found in the registry of the computer, invoke the interface information obtaining unit to virtualize the data card as a standard device of the computer and obtain the class information, subclass information, and protocol information of the standard device interface.

8. The apparatus for updating a data card according to claim 6 or 7, wherein the standard device comprises a CD-ROM device or a storage device.

9. The apparatus for updating a data card according to claim 6 or 7, wherein:
the class information is a vendor identifier of the device;
the subclass information is a product identifier of the device; and
the protocol information is protocol type information of the device.

10. The apparatus for updating a data card according to claim 6, wherein the running unit is further configured to deliver data to the data card through a small computer system interface, SCSI, to implement updating of the data card.
